# EUROPÄISCHE PATENTSCHRIFT

(11) **EP 1 842 901 B1**
(45) Veröffentlichungstag und Bekanntmachung des Hinweises auf die Patenterteilung: **12.12.2007**
(21) Anmeldenummer: 06007134.7
(22) Anmeldetag: 04.04.2006
(51) Int. Cl.: C12G 3/02, C12C 12/00

(54) **Verfahren zur Herstellung eines alkoholischen Getränks**
Method of making an alcoholic beverage
Procédé de production d'une boisson alcoholique

(43) Veröffentlichungstag der Anmeldung: 10.10.2007
(73) Patentinhaber: Sektkellerei Schloss Wachenheim AG, 67157 Wachenheim (DE)
(72) Erfinder: Kretschmer, Bernd, Dr., 12683 Berlin (DE)
(74) Vertreter: Müller Fottner Steinecke

(56) Entgegenhaltungen:
- WO-A-20/06032293
- DE-A1- 4 010 584
- US-A- 4 495 204
- US-A1- 2001 043 965
- DATABASE WPI Week 200007 Derwent Publications Ltd., London, GB; AN 2000-084802 XP002263719 & RU 2 118 343 C1 (PIVOINDUSTRIYA PRIMORYA STOCK CO) 27. August 1998 (1998-08-27)
- "Druivenbier" SHELTON BROTHERS, [Online] 2003, XP002399665 Gefunden im Internet: URL:http://www.sheltonbrothers.com/beers/b eerProfile.asp> [gefunden am 2006-09-19]
- "Paeleman Profile" SHELTON BROTHERS, 2003, XP002399666 Gefunden im Internet: URL:http://www.sheltonbrothers.com/beers/b reweryProfile.asp?BreweryID=25> [gefunden am 2006-09-19]

## Beschreibung

Die Erfindung betrifft ein Verfahren zur Herstellung eines alkoholischen Getränks auf der Basis der alkoholischen Vergärung eines Vorproduktes enthaltend Bierwürze und Traubenbestandteile, ein durch das erfindungsgemäße Verfahren hergestelltes alkoholisches Getränk und dessen Vorprodukte, sowie deren Verwendung in bzw. als Arznei-, Nahrungs- und Futtermittel.

Dass unter Verwendung von Mikroorganismen Gärungsprodukte hergestellt werden können, die sich für den menschlichen Verzehr eignen, ist seit vielen tausend Jahren bekannt. Den mengenmäßig größten Anteil an diesen Gärungsprodukten dürften mit Hilfe von Hefe erzeugte alkoholhaltige Getränke bilden. Wenn sich an den Vorgang der Vergärung kein Destillationsvorgang anschließt, kann man durch alkoholische Gärung Getränke mit einem maximalen Alkoholgehalt von ca. 15 bis 17 Vol.% erzeugen. Die mit Abstand bekanntesten Vertreter derartiger, durch alkoholische Gärung hergestellte Getränke sind Bier, Wein und Sekt. Seit einiger Zeit sind Mischgetränke bekannt, die z.B. durch eine Mischung von Bier mit bierfremden Geschmacksträgern hergestellt werden, wie beispielsweise Fruchtsaft.

Der Erfindung liegt die Aufgabe zugrunde, ein alkoholisches Getränk und Verfahren zu dessen Herstellung bereitzustellen.

Diese Aufgabe wird durch die in den Ansprüchen gekennzeichneten Ausführungsformen gelöst und wie nachstehend erläutert.

Das erfindungsgemäße Verfahren zur Herstellung eines alkoholischen Getränks ist dadurch gekennzeichnet, dass ein Substrat vergoren wird, das Traubenbestandteile, Bierwürze und Mikroorganismen, insbesondere Hefe enthält, wobei zumindest ein Teil der Traubenbestandteile mit entalkoholisiertem Wein (EAW) zugeführt wird.

Unter "entalkoholisiertem Wein" (EAW) versteht man im Allgemeinen einen Wein wie Tafelwein, Landwein oder Qualitätswein, dessen Alkohol-Gehalt unter geeigneter und schonender Entgeistung durch beispielsweise thermische Prozesse oder Membranprozesse, bei deren Anwendung eine Volumenverminderung des Weines von höchstens 25 vom Hundert eintreten darf, oder Extraktion mit flüssigem Kohlendioxid, auf 0,5% vol Alkohol-Gehalt oder weniger abgesenkt wurde. Ein relativ neues Verfahren dafür ist Spinning Cone Column (Schleuderkegelkolonne). Weitere entsprechende Verfahren zur Verminderung oder gänzlichen Entfernung von Alkohol aus Wein und anderen alkoholhaltigen Getränken sind dem Fachmann bekannt und beschrieben, siehe beispielsweise die europäische Anmeldung EP 0 859 049 A1 oder die deutschen Patente DE 41 37 572 C2 und DE 41 09 080 C1 sowie die darin jeweils zitierten Druckschriften.

In der kürzlich veröffentlichten internationalen Anmeldung WO2006/032293 wird ein Verfahren offenbart, das sich dadurch auszeichnet, dass Bierwürze oder Malzextrakt jeweils ggf. unter Zusatz von gekochtem, unvermälztem Getreide, Mais oder Reis als Stärkelieferant, gemeinsam mit Traubenbestandteilen vergoren werden. Dadurch unterscheidet sich dieses Verfahren von bekannten Verfahren zur Herstellung bierähnlicher oder bierhaltiger Mischgetränke, bei denen die bierfremden Geschmacksträger erst nach Abschluss des Herstellungsverfahrens des Bieres zugegeben werden. Ebenso unterscheidet sich dieses Verfahren von bekannten Verfahren zur Herstellung weinhaltiger oder weinähnlicher Mischgetränke. Im Gegensatz zu den vorbekannten Verfahren werden die vergärbaren Bestandteile der im Substrat enthaltenen Traubenbestandteile zumindest teilweise mitvergoren, so dass sich im Hinblick auf die visuellen, olfaktorischen (geruchlichen) und gustatorischen (geschmacklichen) Eigenschaften völlig neuartige Getränke herstellen lassen.

Das vorliegende erfindungsgemäße Verfahren beruht auf dem in der WO2006/032293 beschriebenen Verfahren, zeichnet sich aber insbesondere dadurch aus, dass ein wesentlicher Teil der Traubenbestandteile mit entalkoholisiertem Wein (EAW) statt Wasser vergoren wird. Wie in dem Ausführungsbeispiel erläutert, wird durch die Verwendung von EAW statt Wasser zur Verdünnung des Süßreserve bzw. des Traubenmost der Weinanteil insgesamt ohne weiteres auf über 50 Volumenprozent angehoben. Dabei werden vorteilhafterweise keine wesentlichen geschmacklichen Veränderungen im Fertiggetränk gegenüber dem durch das in der internationalen Anmeldung WO2006/032293 beschriebene Verfahren erhältliche Getränk beobachtet.

Ferner wurde bei der Durchführung des erfindungsgemäßen Verfahrens überraschend festgestellt, dass sich durch den Einsatz von EAW im Fermentationsprozess ein zusätzlicher positiver Effekt erzielen lässt, da ein harmonisches Säure-Extrakt-Verhältnis mit einem verbesserten Nährstoffangebot für die Hefe entsteht. Damit bietet die Verwendung von EAW statt Wasser den zusätzlichen Vorteil, dass der gesamte Fermatationsprozess optimiert wird.

Der Bierwürze oder dem Malzextrakt kann als Stärkelieferant ein Zusatz von gekochtem, unvermälztem Getreide, Mais oder Reis beigegeben werden. Dieser Zusatz kann 10 bis 20% der Menge an Bierwürze bzw. Malzextrakt betragen. Der Anteil der Enzyme in dem einen Mischungsbestandteil wird dadurch geringer, was durch längeres Maischen ausgeglichen werden kann. Bei Einsatz von Bierwürze und Malzextrakten lassen sich, wie bei der Bierherstellung, die Geschmacksrichtung und die Farbe des fertigen Getränks durch die Auswahl des Malzes beeinflussen.

Anstelle von Malz können auch ungemalzte Gerste, die mit Enzympräparaten versetzt ist (vgl. Dechema-Monographie 70 (1972), 231-246), oder auch nicht aus Getreide stammende Stärkequellen zur Gärung herangezogen werden. Neben Gerstenmalz wird, insbesondere für die Gärung mit obergäriger Hefe, auch Weizenmalz verwendet.

Ebenso können nach dem erfindungsgemäßen Verfahren Malzgeträrike durch eine Kombination von mit Hefe kurzzeitig in Kontakt gebrachter, schwach gehopfter Malzwürze und Traubenbestandteilen, ggf. mit zusätzlichem Zucker (Saccharose, Invertzucker, Glucose oder Isoglucose) wie in der DE 363 67 21 C1 beschrieben hergestellt werden.

Erfindungsgemäß können als Traubenbestandteile beispielsweise Traubenmaische, Traubenmost, Traubenkonzentrat, mit Wasser rückverdünntes Traubenkonzentrat, Traubensaft oder eine Mischung davon verwendet werden. Mit Wasser rückverdünntes Traubenkonzentrat wird vorteilhafterweise durch Mischen von Traubenkonzentrat mit Wasser oder bevorzugt EAW im Verhältnis von etwa 1:5 bis 1:10, bevorzugt im Verhältnis von etwa 1:8 erhalten. Die Traubenbestandteile können sowohl aus weißen als auch aus rotem Traubenmaterial gewonnen werden; ebenso ist es selbstverständlich möglich, Traubenbestandteile zu verwenden, die aus einer Mischung von weißen und rotem Traubenmaterial hergestellt wurden. Ferner können die Traubenbestandteile vor oder während der Gärung zugegeben werden. Die Art der verwendeten Traubenbestandteile, die Auswahl der Bierwürze, die verwendete Mikroorganismen, insbesondere Hefen und die Führung des Gärungsverfahrens bestimmten im wesentlichen die visuellen, olfaktorischen und gustatorischen Eigenschaften des Gärungsprodukts. Insoweit besteht für den Fachmann eine Mehrzahl an Kombinationsmöglichkeiten, wobei durch routinemäßige Versuche die angemessene Kombination und/oder Verfahrensführung ermittelt werden kann, die die jeweils gewünschten Eigenschaften des Getränks ergibt.

Besonders bevorzugt in den erfindungsgemäßen Verfahren ist die Verwendung von im Wesentlichen mit Wasser und EAW verdünntem Traubenmost, (rück)verdünnten Traubenkonzentrat und/oder verdünnter Süßreserve als Traubenbestandteile. Bei dem verwendeten Traubenkonzentrat handelt es sich vorzugsweise um ein aufkonzentriertes, rektifiziertes Traubenmostkonzentrat (RTK). Das Konzentrat ist also nicht aus sämtlichen Bestandteilen der Trauben hergestellt. Die Traubenmoste, die zu RTK verarbeitet werden, haben in der Regel Standard-Parameter.

Farb- und Gerbstoffe, Fette, Wachse und Enzyme können im Spurenbereich vorliegen. Wie vorstehend erwähnt, kann die Vergärung sowohl mit weißem als auch mit rotem Traubenmaterial beispielsweise in Form von Süßreserve, Most oder RTK erfolgen. Welche Variante letztendlich vorzugsweise genommen wird, kann auch durch Vorversuche ermittelt werden. In solchen Versuchsreihen können sämtliche Produktparameter wie z.B. Farbe, organoleptische Faktoren, Schaumbildung und die im Fertiggetränk enthaltenen ernährungsphysiologisch positiv wirkenden Inhaltsstoffe, Alkoholgehalt, Säure, Extrakt usw. analysiert und in einer Produkt-Standard-Matrix formuliert werden.

Besonders bevorzugt werden in dem erfindungsgemäßen Verfahren Traubenbestandteile verwendet die entweder im wesentlichen von weißen oder roten Weintrauben stammen, wobei aber auch Mischungen, die eine typische rosé Farbe ergeben in bestimmten Fällen ebenfalls bevorzugt sind.

In einer besonders bevorzugten Ausführungsform sind die verwendteten Traubenbestandteile rebsortenrein, d.h. als Traubenquelle für ein bestimmtes Getränk wird lediglich im wesentlichen eine Rebsorte verwendet. Rebsorten für weiße Trauben sind beispielweise Bacchus, Bronner, Chardonnay, Johanniter, Kerner, Merzling, Müller-Thurgau, Perle, Prinzipal, Rieslaner, Riesling, Roter Traminer, Ruländer, Scheurebe, Sauvignon blanc, Silvaner, Weisser Burgunder. Rebsorten für rote Trauben sind beispielweise Acolon, Blauburger, Blauer Frühburgunder, Blaufränkisch, Blauer Portugieser, Blauer Spätburgunder, Blauer Zweigelt, Cabernet Dorsa, Cabernet Mitos, Cabernet Sauvignon, Domina, Dornfelder, Merlot, Regent, Rondo, Schwarzriesling und St. Laurent.
Besonders bevorzugt stammen die Traubenbestandteile im Wesentlichen von der Rebsorte Riesling, Spätburgunder, Grauburgunder, Muskateller, oder Morio-Muskat.

Die Vergärung erfolgt vorzugsweise als Maische (Mischsubstrat aus Traubenmostkonzentraten oder Süßreserven mit Bierwürze). Ein Zusatz von vitaler Hefe kann aber auch erst kurz vor dem Abfüllen des Getränks erfolgen, um eine Flaschengärung einzuleiten.

Als Bierwürze können Schwarzbierwürze, Pilsner Würze, Helle Würze, ungehopfte Würze oder eine Mischung davon verwendet werden. Die Bierwürze kann in Granulatform oder als eine Mischung aus Würzegranulat und Würze verwendet werden.

In den erfindungsgemäßen Verfahren können die Mikroorganismen dem Vorprodukt vor oder nach dem Vermischen seiner Bestandteile hinzugefügt werden. Außerdem ist es möglich, die Mikroorganismen dem Vorprodukt während dem Mischen seiner Bestandteile zuzusetzen bzw. wenigstens einem der Bestandteile vor dem Vermischen mit dem (den) andere(n) Bestandteil(en) hinzuzufügen.

In einer besonders bevorzugten Ausführungsform werden in den erfindungsgemäßen Verfahren Hefepilze als Mikroorganismen zur Ausführung der alkoholischen Gärung verwendet. Hinsichtlich der verwendeten Hefen bestehen grundsätzlich keine Einschränkungen, so dass als Hefe obergärige oder untergärige Hefe oder eine beliebige Mischung davon verwendet werden kann. Möglich ist auch die Verwendung von Weinhefe oder eine Mischung der oben erwähnten obergärigen/untergärigen Hefen mit Weinhefe. Da Weinhefe für gewöhnlich allerdings nicht in der Lage ist die Zucker Maltose und Maltotriose zu verarbeiten, wird bei der Verwendung von Weinhefe vorzugsweise zusätzlich Bierhefe verwendet oder Enzyme zugesetzt, die in der Lage sind die genannten Zucker zu spalten. Alternativ könnte auch gentechnisch veränderte Weinhefe verwendet werden, die durch Einführung entsprechender Fremdgene in die Lage versetzt wird die Zucker ähnlich wie Bierhefe zu vergären.

Welche Hefe bzw. Hefemischungen jeweils zu einem geeigneten Gärungsprodukt führen, kann durch routinemäßige Versuche ermittelt werden. Um eine auch unter zeitlichen Gesichtspunkten optimalen Verfahrensablauf zu erreichen, kann die verwendete Hefe an das verwendete Substrat bzw. Vorprodukt angepasst werden. Vorteilhaft ist es dabei, wenn die verwendete Hefe in der Lage ist, alle Zuckerformen (insbesondere Maltotriose und Maltose aus der Würze und vorwiegend Glukose, Fruktose und Saccharose aus den Traubenbestandteilen) effizient zu verstoffwechseln.
Besonders bevorzugt wird untergärige Hefe verwendet; siehe auch die Beispiele.

Je nach Geschmacksrichtung kann für die alkoholische Gärung unter- oder obergärige Hefe eingesetzt werden. Der Einsatz von obergäriger Hefe erfordert höhere Gärtemperaturen, was fruchtiger schmeckende Getränke ergibt, während der Einsatz von untergäriger Hefe niedrigere Gärtemperaturen zulässt und die Entwicklung ggf. unerwünschter Gärnebenprodukte unterdrücken hilft.

Für gewöhnlich liegt im erfindungsgemäßen Verfahren der prozentuale Anteil an Traubenbestandteilen bezüglich vergärbarer Kohlenhydrate bei etwa ≥ 30 %, vorzugsweise ≥ 40 %, besonders bevorzugt ≥ 50 %.

Als vorteilhaft hat es sich erwiesen, wenn für das erfindungsgemäße Verfahren ein Mischungsverhältnis von den Traubenbestandteilen zu Bierwürze im Verhältnis von etwa 80% zu 20% bis 40% zu 60% bezogen auf die jeweiligen anteiligen Prozentsätze an vergärbaren Kohlenhydraten verwendet wird. Besonders bevorzugt sind Verfahren, wobei ein Mischungsverhältnis von den Traubenbestandteilen zu Bierwürze oder Malzextrakt von ungefähr 50% zu 50% verwendet wird.

Dem erfindungsgemäßen Vorprodukt werden vorzugsweise auch die für Bier üblichen Mengen an Hopfen-Bitterstoffen und biertypischen Aromastoffen zugemischt werden. Diese konventionellen Zusatzstoffe sind dem Fachmann bekannt und kommerziell erhältlich; vgl. "Stärke, Stärkezucker und Proteine für die Nahrungsmittelindustrie", Info-Broschüre, Amylum Group, Burchstraad 10B-9300/Aalst. Es können Maltodextrine der Firma Amylum verwendet werden. Vorzugsweise werden isomerisierter Hopfenextrakt (z. B. mit 30 Gew.-% Isohumulonanteil, Firma Barth) sowie bei der Hopfenextraktion gewonnene Hopfenaromastoffe verwendet. Die Hopfen-Bitterstoffe werden in einer Menge entsprechend 10-20 Bittereinheiten EBC zugesetzt. Die biertypischen Aromastoffe umfassen Hopfen-Aromastoffe und durch Gärung entstehende Bieraromastoffe. Der Zusatz dieser naturidentischen Bieraromastoffe, nämlich "Hopfenaromastoffe", z. B. CO2-Hop-Emulsion "Target" 2500 ppm, Firma Wigan Products Ltd. 4 ml/hl-Fertigprodukt und "Bieraroma", Firma Haarmann und Reimer, Art. Nr. 355244 in einer Menge von 0,5 ml/hl bis 2 ml/hl bezogen auf das Volumen des trinkfertigen Getränks führt zu einer weiteren Abrundung des Geschmacks des trinkfertigen Getränkes.

Bei Bedarf kann der pH-Wert durch Zugabe von Carbonaten erhöht werden. Die Zugabe von Calciumcarbonat und/oder Magnesiumcarbonat ist dabei bevorzugt, da hierdurch wertvolle Mineralstoffbestandteile in das Getränk eingebracht werden. Diese Zugabe kann chargenweise und/oder kontinuierlich in einem beliebigen Verfahrensstadium erfolgen, um für die verschiedenen Mikroorganismen optimale Verfahrensbedingungen zu schaffen oder sie kann erst am Schluss erfolgen, um den gewünschten angenehmen Säureeindruck beim Verkosten des Getränks zu vermitteln. Zum Abpuffern der im Verfahren gebildeten Säuren kann anstelle von Carbonaten auch durch biologisches Sauergut gesäuerte Vorderwürze verwendet werden. Dies hat den Vorteil, dass zusätzlich zu den für die Abpufferung der Säure notwendigen Erdalkaliionen weitere ernährungsphysiologisch wertvolle Spurenelemente wie Zink und Mangan in das Getränk eingebracht werden können und der Süsseindruck des Getränkes nicht durch Saccharose, sondern über natürliche, aus dem Malz stammende Zucker eingestellt wird.

Es können auch sonstige natürliche oder synthetische Säuerungsmittel zur Erzielung des gewünschten pH-Werts verwendet werden, vorzugsweise ein pH-Wert von ca. 3,6-4,8. Es können beispielsweise organische Säuren verwendet werden. Bevorzugt ist Milchsäure.

Gegebenenfalls kann das Vorprodukt mit Zucker und/oder Zuckeraustauschstoffen (Saccharin, Cyclamat) ausgesüsst werden und/oder mit natürlichen Blüten- und/oder Fruchtauszügen, Bierwürze und/oder Aromen abgestimmt werden, um ein wohlschmeckendes Getränk der gewünschten Geschmacksrichtung zu erhalten.

Ist die Herstellung eines kohlensäurehaltigen Getränks erwünscht, so erfolgt eine Carbonisierung auf 1-7 g/l. Diese Carbonisierung kann dazu dienen, das Wachstum von aeroben Mikroorganismen im Getränk zu vermeiden und andererseits ein angenehmes Mundgefühl hervorzurufen.

Die Führung des Gärungsverfahrens selbst kann dabei grundsätzlich dem entsprechen, wie es auch bei der Herstellung von Bier Anwendung findet. Beispielsweise kann erfindungsgemäß ein Verfahren verwendet werden, bei dem sich nach einer Hauptgärung eine Reifungsphase anschließt. Diese Reifungsphase kann wiederum in eine Warmreifungsphase und eine Kaltreifungsphase unterteilt sein.

Mit der Gärtemperatur lässt sich das Endprodukt ebenfalls beeinflussen. Eine Erhöhung der Gärtemperatur führt zur Entwicklung von mehr Aroma. Es entstehend aber auch andere Komponenten, d. h. Gärnebenprodukte, die Einfluss auf den Geschmack des Getränks haben. Das Gärungsverfahren selbst wird vorteilhafter Weise bei einer Temperatur von zwischen etwa 0 °C und 20 °C durchgeführt, wobei die Temperatur während der Hauptgärung vorteilhafterweise zwischen etwa 8 °C und 16 °C beträgt, beispielsweise 10 °C oder 12 °C, besonders bevorzugt 9 °C oder 10 °C d.h. ≤ 10 °C. Die Temperatur bei der zumindest einen Reifungsphase beträgt vorteilhafterweise etwa 6 °C. Wird eine Verfahrensführung mit eine anschließenden Kaltreifungsphase gewählt, so beträgt die Temperatur während der Kaltreifung vorteilhafterweise etwa 0 °C. Als vorteilhaft hat es sich erwiesen, wenn die Warmreifungsphase etwa 1 Woche und die Kaltreifungsphase etwa 3 Wochen andauert.

Gemäß einer weiteren vorteilhaften Ausführungsform des erfindungsgemäßen Verfahrens wird dem Substrat bei Überleitung in die Reifungsphase eine Speise entsprechend einer Konzentration im Gesamtvolumen von etwa 0,5 g bis etwa 3,0 g, bevorzugt etwa 0,8 g bis etwa 1,5 g vergärbarem Kohlenhydrat / 100 ml Substrat zugegeben. Die Speise kann ebenfalls in Form von Traubenbestandteilen zugegeben werden. Durch die Zugabe von Speise bei der Überleitung in die Reifungsphase kann erreicht werden, dass im Endprodukt im Vergleich zu Versuchsführungen ohne Speisezugabe ein höherer Restextraktgehalt im Endprodukt vorhanden ist, ohne die Ethanolkonzentration wesentlich zu beeinflussen. Durch die Zugabe von Speise kann auch Einfluss genommen werden auf die visuellen, olfaktorischen und gustatorischen Eigenschaften des fertigen Gärungsprodukts.

Wie bei der Bierherstellung kann sich an eine Hauptgärung bei offenem Gärtank eine Nachgärung im geschlossenen Tank anschließen, um eine CO₂-Bindung in das Getränk zu erreichen. Zu diesem Zweck kann man dem Getränk nach der Hauptgärung einen Restextrakt oder dgl. beigeben, oder aber man schließt den Gärtank zu einem Zeitpunkt, zu welchem noch ein ausreichender Anteil vergärbarer Bestandteile in dem fast fertigen Getränk enthalten ist. Dem entsprechend erfolgt die Reifungsphase vorteilhafterweise in verschlossenen Behältern. Neben den üblicherweise verwendeten verschlossenen Großbehältern kann die Reifungsphase auch derart erfolgen, dass man das Gärungsprodukt beim Übergang von der Hauptgärung in die Reifungsphase in verschließbare Flaschen abfüllt. Erfolgt die Reifungsphase in verschlossenen Großbehältern, kann das fertige Gärungsprodukt nach Abschluss der Reifungsphase in Fässer und/oder Flaschen abgefüllt werden.

In einer bevorzugten Ausführungsform des erfindungsgemäßen Verfahrens werden nach der Vergärung Traubenbestandteile in einer Menge zugegeben, die zu einer Gesamtvolumenkonzentration (v/v) an Traubenbestandteilen im Getränk von > 50% führt.

In einer weiteren Ausführungsform des erfindungsgemäßen Verfahrens wird das Ethanol, sofern entstanden, zumindest teilweise aus dem Getränk entfernt. Verfahren der Entalkoholisierung sind im wesentlichen thermische Verfahren; siehe beispielsweise "Bierentalkoholisierung durch Verdampfung", U. Hochberg, Brauindustrie- Sonderdruck, Heft 811986, S. 1-5; DE 144 22 38 A1; EP-A-245 845; und Membranverfahren wie in der DE 232 30 94 A1 beschrieben.

Durch Entzug der die Gärung in Gang haltenden Mikroorganismen, etwa der Hefe, oder durch eine Schocktherapie lässt sich die Gärung in bekannter Weise abbrechen, bevor alle vergärbaren Bestandteile des Vorprodukts vergoren sind. Auf diese Weise lassen sich die Geschmacksentwicklung und ggf. der Alkoholgehalt des Getränks ebenfalls beeinflussen. Als eine Variante des erfindungsgemäßen Verfahrens ist daher vorgesehen, dass das (teil)vergorene Substrat von der Hefe abgetrennt, beispielsweise abgezogen wird. Dieses Abziehen kann beispielsweise während der Hauptgärung, beim Übergang von der Hauptgärung in die Reifephase oder am Ende des erfindungsgemäßen Verfahrens erfolgen.

In einer Ausführungsform der hier beschriebenen erfindungsgemäßen Verfahren wird ein Teil des im Getränk enthaltenen Wassers entfernt, um ein Getränk-Konzentrat zu erhalten. Erfindungsgemäß können auch als Zwischenprodukt Konzentrate, analog hochkonzentrierter Würzen, bestehend aus den klassischen Bierrohstoffen, hergestellt werden, die danach verdünnt oder unverdünnt der alkoholischen Gärung unterzogen werden; siehe beispielsweise Abriss der Bierbrauerei, Narziss und Ferdinand, Enke Verlag, Stuttgart, 1980. Andererseits werden analog vorgefertigte Produkte, die aus einer mehr oder weniger ausgeprägten alkoholischen Gärung hervorgegangen sind, durch unterschiedliche Verfahren zu alkoholfreien Konzentraten verarbeitet, um später wieder durch Versatz mit kohlensäurehaltigem Wasser zu alkoholfreiem Bier, bzw. durch weitere Zugabe von Ethanol zu normalen Bieren rekonstruiert zu werden; siehe beispielweise die DE 296 08 572 U1.

Die Konzentration des erfindungsgemäßen Konzentratgemisches kann in weiteren Bereichen variieren. Denkbar ist ein pulverförmiges Konzentrat. Vorzugsweise wird jedoch durch den Zusatz von Wasser ein flüssiges Konzentrat mit einem Feststoffgehalt von 30 bis 90 Gew.-% hergestellt.

Zur Vermeidung von mikrobiellem Verderb sollte das erfindungsgemäße Konzentratgemisch thermisch behandelt (z. B. Kurzzeiterhitzung oder Pasteurisieren) oder kaltentkeimt (z. B. durch Zusatz von Velcorin TM, Fa. Bayer) werden.

Das erfindungsgemäße Konzentratgemisch kann durch Mischen mit kohlensäurehaltigem Wasser auf ein Feststoffgehalt von 3 bis 8 Gew.-% verdünnt werden. Der Kohlensäuregehalt des Wassers beträgt bevorzugt zwischen 4,5 und 6 g/l. Dieser Schritt kann in Anlagen, die zur Herstellung von alkoholfreien Getränken verwendet werden, erfolgen. Das Verdünnungsverhältnis beträgt hierbei für gewöhnlich 1:6 bis 1:8 bezogen auf die Volumina Konzentratgemisch zu Wasser.

In einer weiteren Ausführungsform kann das erfindungsgemäße Konzentratgemisch mit einem Bier und/oder Wein-Wassergemisch mit bis zu 60 Vol.-% Bier oder durch alkohol- und kohlensäurehaltiges Wasser mit einem Alkoholgehalt von bis zu 8 Vol.-% verdünnt werden, um ein alkoholhaltiges Getränk zu erhalten. Nach der Verdünnung ist eine Filtration und Pasteurisation des Getränkes empfehlenswert.

In einer anderen bzw. zusätzlichen Ausführungsform wird vor oder während der Durchführung oder nach Abschluss des erfindungsgemäßen Verfahren wenigstens ein Zusatzstoff mit ernährungsphysiologisch positiver und/oder die Gemütsverfassung positiv beeinflussender Wirkung zugegeben.

Je nach den spezifischen Produktanforderungen, wie z. B. dem erwünschten Biertyp, können weitere Hilfs- und Zusatzstoffe erforderlich sein. Diese konventionellen Additive sind dem Fachmann bekannt. Zu nennen sind vor allem Farbzusätze, Schaumstabilisatoren, pflanzliche Proteinfraktionen, Vitamine, Mineralstoffe, Enzyme, Mikroorganismen und/oder deren Bestandteile, Bestandteile/Wirkstoffe pflanzlichen und/oder tierischen Ursprungs, Antioxidantien sowie weitere geschmacksrelevante Zusätze. Je nach den Anforderungen kann die Art und Menge dieser Additive variieren. Entsprechend dem neuen Zusatzstoffrecht darf beispielsweise Bier (auch deutsches) nun bestimmte zugelassene Zusatzstoffe (z. B. Milchsäure, Citronensäure, Ascorbinsäure) enthalten.

Zur Geschmacksabrundung und zum Einbringen von wertvollen biologischen Inhaltsstoffen können die Ausgangsmateralien mit einem untergeordneten Anteil an anderen Fruchtextrakten, Blütenextrakten, Gemüseextrakten, Melasse, Tee, Kräutern, Weißdorn und dergl. versetzt werden. Derartige Zusätze können aber auch erst im Anschluss an die fermentative Behandlung zugesetzt werden.

Aus der Literatur sind eine Reihe von Getränken, die weitere Zusatzstoffe enthalten, bekannt. Beispielweise können Alkaloide wie Koffein zugesetzt werden; siehe die DE 14 42 279 A1 oder EP-A-0 252 063 in denen die Herstellung von Bier beschrieben werden dem Koffein, bspw. in einer Menge von 65 bis 150 mg/l zugesetzt wird. Aus der EP-A-0 844 304 ist ein alkoholhaltiges wässriges Getränk bekannt, das sich dadurch auszeichnet, dass es Inhaltsstoffe von Hanfpflanzen insbesondere Tetrahydrocannabinol enthält. Ferner können dem erfindungsgemäßen Getränk Aphrodisiaka zugesetzt werden wie Yohimbin, Catuaba, Damiana, Guaraná, oder Chili.

Zur Schaumstabilisation kommen vorrangig Eisensalze zum Einsatz. Parallel können reduzierende Mittel beigemengt werden, um die enthaltenen Metalle zu reduzieren. Eine Braunfärbung des Schaums wird somit verhindert. Weiterhin können zur Stabilisierung des Schaums Nickel- und Zinksalze genutzt werden. Damit diese den Schaum stabilisieren können, treten Sie in Verbindung mit hochmolekularen Eiweißverbindungen. Neben den Metallsalzen werden auch Alginate, Xantan und Gummiarabikum verwendet. Diese Stoffe sind Verdickungsmittel, die den Schaum fester machen.

Solche Zusatzstoffe können grundsätzlich auch dem erfindungsgemäßen Getränk vor oder während des Gärungsprozess oder im Endprodukt beigegeben werden, beispielsweise vor dem Abfüllen des Getränks in Flaschen, Dosen, Fässer, Container oder anderer Gebinde. Das Getränk kann vor der Abfüllung nach bekannten Filtrationsmethoden von den vorhandenen Hefezellen und Eiweissstoffen, gegebenenfalls unter Verwendung von üblichen Filterhilfs- und/oder Stabilisierungsmitteln, befreit und/oder anschließend mittels einer dem Fachmann bekannten Hochkurzzeiterhitzung (Flash-Pasteurisation) haltbar gemacht werden.

Die Schaumhaltbarkeit kann auch dadurch deutlich verbessert werden, dass das alkoholische Getränk vor und/oder nach der Hauptgärung filtriert und/oder zentrifugiert wird. Wird das erfindungsgemäß hergestellte Getränk filtriert, ist die Schaumhaltbarkeit erheblich verbessert. Bei Nachgärung im Tank kann die Filtration bzw. Zentrifugation auch nach der Nachgärung erfolgen. Eine verbesserte Schaumbildung kann auch durch Abziehen unter Stickstoff erzielt werden. Ferner kann eine cremige Schaumbildung analog der Herstellung des Tuborg Bier (Carlsberg, Dänemark) gewünscht sein.

Weitere Parameter, mit denen sich das Endprodukt, insbesondere dessen Geschmacksbild, beeinflussen lässt, sind:
a) das Mischungsverhältnis der Bestandteile des zu vergärenden Vorprodukts,
b) die Konzentration der Mischungsbestandteile des Vorprodukts,
c) der Anteil ggf. beigegebenen Hopfens,
d) der Einsatz von Rohfrüchten und deren Anteil.
   Allgemeine Bedingungen der Prozessführung bei Gärungsverfahren können auch nachgelesen werden bei "Die Bierbrauerei", Band 1: Die Technologie der Malzzubereitung, Ferdinand Enke Verlag Stuttgart und "Handbuch für die Brauwirtschaft/Vergleichsdaten zur Betriebs- und Qualitätskontrolle", Alfa-Laval Industrietechnik GmbH, Hamburg.

Das durch das erfindungsgemäße Verfahren hergestellte Gärungsprodukt stellt vorzugsweise ein alkoholhaltiges Getränk dar. Dieses aber auch ein entsprechendes, ggf. teilvergorenes, Vorprodukt, enthaltend wie vorstehend beschrieben Bierwürze oder Malzextrakt und Traubenbestandteile kann beispielsweise als Aromaträger anderen Lebensmitteln bzw. Nahrungs- Arznei- oder Futtermitteln zugegeben werden, so dass durch das erfindungsgemäße Gärungsprodukt auch neue Lebensmittel geschaffen werden können. Dementsprechend sind die erhaltenen Getränke, die möglicherweise auch weiter aufbereitet werden, als auch die vorstehend beschriebenen Vorprodukte ebenfalls Gegenstand der vorliegenden Erfindung.

Daher betrifft die vorliegende Erfindung auch alkoholische Getränke die nach einem der vorstehend beschriebenen Verfahren erhältlich sind. Insbesondere betrifft die vorliegende Erfindung alkoholische Getränke, deren Volumenanteil von Traubenbestandteilen > 50 %, beispielsweise > 51 - 75 %, vorzugsweise > 51 % ist; siehe auch das Ausführungsbeispiel.

Das erfindungsgemäße Getränkt zeichnet sich ferner vorzugsweise durch eine oder mehrere der folgenden Produktparameter aus:
(a) Alkoholgehalt: 5-6 %;
(b) höhere Alkohole: < 300 mg/l, vorzugsweise < 100 mg/l;
(c) Ester (Ethylacetat
   und Iso-Amylacetat): < 25 mg/l, vorzugsweise < 15 mg/l
(d) Aldehyde: < 60 mg/l, vorzugsweise < 30 mg/l, besonders bevorzugt
   zwischen 5 und 30 mg/l, beispielsweise 8 mg/l;
(e) pH-Wert: 3,6 bis 4,5;
(f) CO₂-Gehalt: 5 bis 7 g/l;
(g) Bitterstoffe [BE]: 10 bis 17 BE;
(h) Farbe: vorzugsweise weiß 5-10 oder rot 20-35;
(i) sowie vorzugsweise zumindest nachweisbare Spuren von Quercetinen, Monoterpene, Anthocyane und/oder Katechinen.

In den nachfolgenden Zusammenstellungen sind die Normparameter von Bier und Wein, sowie die durchschnittliche Parameter des erfindungsgemäßen Getränks gegenübergestellt. Gemäß einem oder mehrerer dieser Parameter lässt sich das nach dem erfindungsgemäßen Verfahren erhaltene Getränk eindeutig von Bier und Wein, und von Mischgetränken unterscheiden, bei denen beispielsweise Bier und Wein nachträglich gemischt werden.

| Parameter | | Einheiten | Pilsener Bier Würze | Wein | erfindungsgemäßes Getränk |
|---|---|---|---|---|---|
| Gesamtkohlenhydrate Restzucker | | [g/l] | 30-40 | 2-50 | 4-10 |
| Ethanolgehalt | | [%vol] | 4,6-5,6 | 5-17 | 3,0-7,0 |
| CO₂ | | [g/l] | 4-5 | 0-1,8 | ca. 5 |
| PH | | | 4,4-4,7 | 2,8-3,8 | 3,6-4,5 |
| Bitterstoffe | | [BE] | 25-35 | 0 | 10-17 |
| Farbe | | [EBC] | 5,5-10 | 3-9 | Weiß 5-10 |
| | | | | | Rot 20-35 |
| Gesamtsäure | | [g/l] | 0,3-0,7 | 6-12 | 8-10 |
| Glyzerin | | [g/l] | 0,4-3,1 | 6-10 | 7-10 |
| Methanol, | weiß | [mg/l] | | 15-130 | 10-70 |
| | rot | | | 50-250 | 50-150 |
| höhere Alkohole: | | [mg/l] | 60-80 | 150-700 | 80-150 |
| | Iso-Amylalkohole | | 44 | 70-190 | 20-70 |
| | Iso-Butanol bzw. | | 8 | | |
| | Butandiol-2,3 | | | 400-700 | 10-30 |
| Ester (Ethylacetat und Iso-Amylacetat) | | [mg/l] | 17-26 | 60-230 | 17-150. |
| Aldehyde | | [mg/l] | 8-10 | 45-100 | 8-60 |
| Gerbstoffe: | | [mg/l] | | | |
| | Mit Weißwein | | | 5-300 | 10-200 |
| | Mit Rotwein | | | 1000-2500 | 900-2300 |

| Parameter | | Einheiten | Pilsener Bier | Wein | erfindungsgemäßes Getränk (geschätzt) |
|---|---|---|---|---|---|
| Mineralien^{x}: | | [mg/l] | | | |
| | Natrium | | 50-100 | 5-15 | 15- |
| | Kalium | | 300-400 | 650-1500 | 400- |
| | Magnesium | | 100 | 65-100 | 65-100 |
| | Calcium | | 20-50 | 60-200 | 50- |
| | Chlorid | | 66-400 | 20-90 | 40- |
| | Sulfat | | 43-440 | 160-400 | 60- |
| Vitamine: | | [µg/l] | | | |
| | Thiamin (B1) | | 3-80 | 10 | |
| | Riboflavin (B2) | | 20-1300 | 100-200 | |
| | Pantothensäure (B3) | | 40-2000 | 200-2000 | |
| | Niacin (B4) | | 3000-14000 | 1000-2000 | |
| | Pyridoxin (B6) | | 70-1700 | 200-400 | |
| Polyphenole, ges.: | | [mg/l] | bis 200 | | 200-2000 |
| | Weißwein | | | 200 | |
| | Rotwein | | | bis 4000 | |
| | Quercentin | | 1-10 | | |
| | Catechin | | 1-20 | bis 30 | bis 30 |
| | Epicatechin | | 1-10 | bis 30 | bis 30 |
| | Resveratrol | | | 0,08-2,33^{xx} | |

| | | | | | |
|---|---|---|---|---|---|
| x - in Abhängigkeit von der Rohstoff- und Wasserqualität xx - www.idw-online.de/public/zeige_ptm.html | | | | | |

Die Parameter für Bier und Wein, sowie Verfahren zu deren Ermittlung sind dem Fachmann bekannt und nachzulesen beispielsweise für Bier in Kennzahlen zur Betriebskontrolle, Krüger/Anger, BEHR'S Verlag 1992 und "Der Wein", Ludwig Jakob, Verlag Eugen Ulmer, 1997; Weinkompendium, K.-G. Bergner, Wissenschaftl. Verlagsgesellschaft, 1993.

Die Zusammenstellung der Parameter zeigt auch, dass das nach dem erfindungsgemäßen Verfahren erhaltene Getränk vorzugsweise andere Produktparameter aufweist als man sie nach einfacher Kombination von den Fertigprodukten Bier und Wein hätte erwarten können. Dabei hat sich überraschend herausgestellt, dass das erfindungsgemäße Getränk im wesentlichen die jeweils für Bier und Wein günstigsten Eigenschaften aufweist, und dies meist in einem höheren Grad als es man von einer einfachen Subtraktion, d.h. Mischungsverhältnis von Bierwürze zu Traubenbestandteilen hätte erwarten können.

Das erfindungsgemäße Getränk zeichnet sich durch eine gehobene Rezenz, d. h. frischen Geschmack und langhaltigen Schaum aus, der in seiner Konsistenz zwischen dem von Bier und Schaumwein liegt, ohne den Nachteil beispielsweise von Bierschaum, der nach einiger Standzeit einen schalen Eindruck des Getränks vermittelt.

Die vorliegende Erfindung betrifft schließlich auch eine Zusammenstellung von Mitteln zur Durchführung des erfindungsgemäßen Verfahrens, wobei die Zusammenstellung Traubenbestandteile, Malzextrakt, Würzegranulat, Mikroorganismen, insbesondere Hefe und/oder andere vergärbare Bestandteile enthält.

Ferner umfasst der Gegenstand der Ansprüche auch Flüssigkeitstanks, Bottiche, Flaschen, Keggies, Dosen und sonstige Behälter, die ein erfindungsgemäßes Getränk oder ein Vorprodukt enthalten sowie Brauereien, Wein- und/oder Sekt-Kellereien enthaltend solche Behälter und in denen ein erfindungsgemäßen Verfahren durchgeführt wird.

Der Offenbarungsgehalt der vorstehend zitierten Dokumente aus dem Stand der Technik ist hiermit durch Bezugnahme in dieser Anmeldung enthalten. Diese und andere Ausführungsformen sind dem Fachmann offenbart und offensichtlich und umfasst durch die Beschreibung und die Beispiele der vorliegenden Erfindung. Weiterführende Literatur zu den oben angeführten Gärungstechniken, die im Sinne der vorliegenden Erfindung verwendet werden können, können dem Stand der Technik entnommen werden, z.B. aus öffentlichen Bibliotheken unter z.B. der Benutzung elektronischer Hilfsmittel. Zudem bieten sich andere öffentliche Datenbanken an wie die "Medline", die über das Internet zur Verfügung stehen.

Weitere biotechnologische Techniken zur Ausführung der Erfindung sind dem Fachmann ebenfalls bekannt und können der einschlägigen Literatur entnommen werden; siehe beispielsweise: Krause, Bierbrauen - Das Praxisbuch. 1. Aufl., München 1998, Ludwig-Verlag; Kunze, Technologiebrauer und Mälzer. 8. Aufl., Berlin 1998, VLB; "Molecular Biology Techniques Manual" 3rd Ed. ed by Coyne, James, Reid and Rybicki (2003) einzusehen auf der Web-Seite: http://www.uct.ac.za/microbiology/manual/MolBiolManual.htm; "Molecular Biology Techniques: An Intensive Laboratory Course" by Ream, Field, and Field (Harcourt Brace & Company: 1998) und die Standardwerke verlegt von Wiley zu Fachbereichen Biotechnologie, Genetik, Zell- und Molekularbiologie, Wiley-UCH Verlag, Boschstrasse 12, D-69469 Weinheim.

Die Erfindung wird nachfolgend anhand eines Beispiels näher erläutert.

### Beispiele

Etwa 145 Liter helle Würze, gehopft, mit einem Extrakt von etwa 12 g/100 g werden mit etwa 340 l Süßreserve/Most mit einem Extrakt von etwa 12 g/100 g versetzt, wobei etwa 851 Süßreserve/Most sowie 140 l EAW zur Verdünnung der Traubenbestandteile eingesetzt werden. Die Gärung wird mit untergäriger Bierhefe eingeleitet. Nach der Fermentation werden noch einmal etwa 36 l mit EAW verdünnte Traubenbestandteile zugesetzt, so dass insgesamt an Traubenbestandteilen und EAW etwa 261 l auf etwa 510 l Gesamtmenge eingesetzt werden, was einem prozentualen Volumenanteil der Weinkomponente von etwa 51 % entspricht.

Es wird also ein alkoholisches Getränk mit einem Anteil an Traubenbestandteilen von mehr als 50% erhalten, das ferner im Wesentlichen die in der nachfolgenden für das erfindungsgemäße Getränk aufgeführten Parameter aufweist.

| Parameter | | Einheiten | Pilsener Bier Würze | Wein | erfindungsgemäßes Getränk |
|---|---|---|---|---|---|
| Gesamtkohlenhydrate | | [g/l] | 30-40 | | |
| Restzucker | | | | 2-50 | 4-10 |
| Ethanolgehalt | | [%vol] | 4,6-5,6 | 5-17 | 3,0-7,0 |
| CO₂ | | [g/l] | 4-5 | 0-1,8 | ca. 5 |
| PH | | | 4,4-4,7 | 2,8-3,8 | 3,6-4,5 |
| Bitterstoffe | | [BE] | 25-35 | 0 | 10-17 |
| Farbe | | [EBC] | 5,5-10 | 3-9 | Weiß 5-10 |
| | | | | | Rot 20-35 |
| Gesamtsäure | | [g/l] | 0,3-0,7 | 6-12 | 8-10 |
| Glyzerin | | [g/l] | 0,4-3,1 | 6-10 | 7-10 |
| Methanol, | weiß | [mg/l] | | 15-130 | 10-70 |
| | rot | | | 50-250 | 50-150 |
| höhere Alkohole: | | [mg/l] | 60-80 | 150-700 | 80-150 |
| | Iso-Amylalkohole | | 44 | 70-190 | 20-70 |
| | Iso-Butanol bzw. | | 8 | | |
| | Butandiol-2,3 | | | 400-700 | 10-30 |
| Ester (Ethylacetat und Iso-Amylacetat) | | [mg/l] | 17-26 | 60-230 | 17-150 |
| Aldehyde | | [mg/l] | 8-10 | 45-100 | 8-60 |
| Gerbstoffe: | | [mg/l] | | | |
| | Mit Weißwein | | | 5-300 | 10-200 |
| | Mit Rotwein | | | 1000-2500 | 900-2300 |

| Parameter | | Einheiten | Pilsener Bier | Wein | erfindungsgemäßes Getränk (geschätzt) |
|---|---|---|---|---|---|
| Mineralien^{x}: | | [mg/l] | | | |
| | Natrium | | 50-100 | 5-15 | 15- |
| | Kalium | | 300-400 | 650-1500 | 400- |
| | Magnesium | | 100 | 65-100 | 65-100 |
| | Calcium | | 20-50 | 60-200 | 50- |
| | Chlorid | | 66-400 | 20-90 | 40- |
| | Sulfat | | 43-440 | 160-400 | 60- |
| Vitamine: | | [µg/l] | | | |
| | Thiamin (B1) | | 3-80 | 10 | |
| | Riboflavin (B2) | | 20-1300 | 100-200 | |
| | Pantothensäure (B3) | | 40-2000 | 200-2000 | |
| | Niacin (B4) | | 3000-14000 | 1000-2000 | |
| | Pyridoxin (B6) | | 70-1700 | 200-400 | |
| Polyphenole, ges.: | | [mg/l] | bis 200 | | 200-2000 |
| | Weißwein | | | 200 | |
| | Rotwein | | | bis 4000 | |
| | Quercentin | | 1-10 | | |
| | Catechin | | 1-20 | bis 30 | bis 30 |
| | Epicatechin | | 1-10 | bis 30 | bis 30 |
| | Resveratrol | | | 0,08-2,33^{xx} | |

| | | | | | |
|---|---|---|---|---|---|
| x - in Abhängigkeit von der Rohstoff- und Wasserqualität xx - www.idw-online.de/public/zeige_ptin.html | | | | | |

Die Parameter für Bier und Wein, sowie Verfahren zu deren Ermittlung sind dem Fachmann bekannt und nachzulesen beispielsweise für Bier in Kennzahlen zur Betriebskontrolle, Krüger/Anger, BEHR'S Verlag 1992 und "Der Wein", Ludwig Jakob, Verlag Eugen Ulmer, 1997; Weinkompendium, K.-G. Bergner, Wissenschaftl. Verlagsgesellschaft, 1993.

## Patentansprüche

1. Verfahren zur Herstellung eines alkoholischen Getränks mit einem Volumenanteil an Traubenbestandteilen von > 50 % und einem Alkoholgehalt von 5-6%, wobei als Vorprodukt Bierwürze oder Malzextrakt mit Traubenbestandteilen unter Verwendung von Hefe alkoholisch vergoren wird, und zumindest ein Teil der Traubenbestandteile mit entalkoholisiertem Wein (EAW) zugeführt wird.

2. Verfahren nach Anspruch 1, wobei als Traubenbestandteile Traubenmaische, Traubenmost, Traubenkonzentrat, Traubensaft oder eine Mischung davon verwendet wird, wobei vorzugsweise als Traubenbestandteile im Wesentlichen mit Wasser und EAW verdünnter Traubenmost, (rück)verdünntes Traubenkonzentrat und/oder verdünnte Süßreserve verwendet wird.

3. Verfahren nach Anspruch 1 oder 2, wobei Traubenbestandteile und/oder andere Zusatzstoffe während der Gärung zugegeben werden.

4. Verfahren nach einem der Ansprüche 1 bis 3, wobei der prozentuale Anteil an Traubenbestandteilen bezüglich vergärbarer Kohlenhydrate ≥ 30% ist.

5. Verfahren nach einem der Ansprüche 1 bis 4, wobei nach der Vergärung Traubenbestandteile in einer Menge zugegeben werden, die eine Gesamtvolumenkonzentration (v/v) an Traubenbestandteilen im Getränk von > 50% ergibt.

6. Verfahren nach einem Ansprüche 1 bis 5, umfassend den Schritt/die Schritte des Abfüllens des Getränks in Fässer, Flaschen, Keggy und/oder Dosen.

7. Getränk, erhältlich nach einem Verfahren der Ansprüche 1 bis 6, mit einem Volumenanteil an Traubenbestandteilen von > 50% und einem Alkoholgehalt von 5-6%

8. Getränk nach Anspruch 7, mit einem Gehalt an Aldehyd von < 30 mg/l.

9. Mischgetränk, enthaltend ein Getränk nach Anspruch 7 oder 8.

10. Flüssigkeitstank, Bottich, Flasche, Keggy, Dose oder sonstige Behälter, enthaltend ein Getränk nach Anspruch 7 oder 8 oder ein Mischgetränk nach Anspruch 9.

## Claims

1. Method for preparing an alcoholic beverage having a volume fraction of grape components of >50% and an alcoholic content of 5-6%, wherein as initial product beer wort or malt extract is alcoholically fermented with grape components using yeast, and wherein at last a part of the grape components is supplied together with dealcoholized wine (EAW).

2. Method according to claim 1, wherein grape pornace, grape most, grape concentrate, grape juice or a mixture thereof is used as grape components, wherein preferably grape most diluted with water and EAW, (re)diluted grape concentrate and/or diluted unfermented grape juice ("Süßreserve") is/are essentially used as grape components.

3. Method according to claim 1 or 2, wherein during fermentation grape components and/or other additives are added.

4. Method according to anyone of claims 1 to 3, wherein the percentage of grape components as regards fermentable carbohydrates is ≥ 30%.

5. Method according to anyone of claims 1 to 4, wherein after the fermentation grape components are added in an amount which results to a total volume concentration (v/v) of grape components in the beverage of >50%.

6. Method according to anyone of claims 1 to 5, comprising the step/steps of filling the beverage into barrels, bottles, keggy and/or cans.

7. Beverage, obtainable by a method according to claims 1 to 6, having a volume fraction of grape components of>50% and an alcoholic content of 5-6%.

8. Beverage according to claim 7, having a content of aldehyde of <30 mg/l.

9. Mixed beverage, comprising a beverage according to claim 7 or 8.

10. Tank for liquids, tun, bottle, keggy, can, or other container, comprising a beverage according to claim 7 or 8, or a mixed beverage according to claim 9.

## Revendications

1. Procédé destiné à la fabrication d'une boisson alcoolisée avec une proportion de volume en composants contenant du raisin de > 50 % et avec une teneur en alcool de 5 - 6 %, du moût ou de l'extrait de malt utilisés comme tête de distillation étant fermentés avec des composants contenant du raisin en utilisant de la levure, et au moins une portion des composants contenant du raisin étant introduite avec du vin désalcoolisé (VDA).

2. Procédé selon la revendication 1, du moût de raisin, du vin doux, du concentré de raisin, du jus de raisin ou leur mélange étant utilisés comme composants contenant du raisin, du vin doux dilué essentiellement avec de l'eau et du VDA, du concentré de raisin (re)dilué et/ou du jus de raisin non fermenté dilué étant de préférence utilisés comme composants contenant du raisin.

3. Procédé selon la revendication 1 ou 2, des composants contenant du raisin et/ou d'autres additifs étant ajoutés pendant la fermentation.

4. Procédé selon l'une quelconque des revendications 1 à 3, la proportion en pourcentage en hydrates de carbone fermentables par rapport aux composants contenant du raisin étant ≥ 30 %.

5. Procédé selon l'une quelconque des revendications 1 à 4, des composants contenant du raisin étant ajoutés après la fermentation en une quantité qui permet d'obtenir une concentration totale en volume (v/v) en composants contenant du raisin dans la boisson de > 50 %.

6. Procédé selon l'une quelconque des revendications 1 à 5, comprenant l'étape/les étapes de conditionnement de la boisson dans des fûts, dans des bouteilles, dans des keggies et/ou dans des boîtes.

7. Boisson, que l'on peut obtenir selon un procédé des revendications 1 à 6, avec une proportion de volume en composants contenant du raisin de > 50 % et avec une teneur en alcool de 5 - 6 %.

8. Boisson selon la revendication 7, avec une teneur en aldéhyde de < 30 mg/l.

9. Boisson mélangée, contenant une boisson selon la revendication 7 ou 8.

10. Réservoir de liquide, cuve, bouteille, keggy, boîte ou autre contenant, contenant une boisson selon la revendication 7 ou 8 ou une boisson mélangée selon la revendication 9.
